# EUROPÄISCHE PATENTANMELDUNG

(11) **EP 1 707 860 A2**
(43) Veröffentlichungstag der Anmeldung: **04.10.2006**
(21) Anmeldenummer: 06006930.9
(22) Anmeldetag: 31.03.2006
(51) Int. Cl.: F16L 11/15, F16L 25/00

(54) **Flexible Gasleitung**

(30) Priorität: 01.04.2005 DE 202005005210 U
(71) Anmelder: Boa AG, 6023 Rothenburg (CH)
(72) Erfinder: Beck, Thomas, 6370 Oberdorf (CH)
(74) Vertreter: Blum, Rudolf Emil

(57) **Zusammenfassung**

Die Erfindung betrifft eine flexible Gasleitung aus einem gasdichten Edelstahlwellrohrschlauch (1) mit endseitig angeschweissten Anschlusselementen (3), welcher unmittelbar von einer einschichtigen, zugfesten Umhüllung (2) aus PVC umgeben ist. Dabei erstreckt sich die Umhüllung (2) über die Verbindungstellen zwischen dem Wellrohrschlauch (1) und den Anschlusselementen (3) hinaus und ist in Zugrichtung kraft- und formschlüssig mit den Anschlusselementen (3) verbunden, zur Übertragung von an der Gasleitung angreifenden Zugkräften auf die Anschlusselemente (3).

Solche flexiblen Gasleitungen ermöglichen eine sichere und kostengünstige Verbindung zwischen einem hausfesten Gasanschluss und einem mit Brenngas betriebenen Hausgerät.

## Beschreibung

Die vorliegende Erfindung betrifft eine flexible Gasleitung für die Versorgung von Haushaltsgeräten mit Brenngas sowie ein Verfahren zur Herstellung der flexiblen Gasleitung gemäss den Oberbegriffen der unabhängigen Patentansprüche.

Heute bekannte gattungsgemässe Gasleitungen bestehen aus einem gasdichten metallischen Wellschlauch mit endseitig gasdicht angelöteten oder angeschweissten Anschlussstücken. Dabei ist der Wellschlauch von einem Kunststoffmantel, der mit einer zugfesten Armierung, z.B. aus Drahtgeflecht, versehen ist, umgeben, welcher derartigmit den Anschlussstücken verbunden ist, dass an der Gasleitung angreifende Zugbelastungen von der Armierung aufgefangen werden.

Hierdurch lässt sich eine Zugbeanspruchung des Wellschlauches und der Schweiss- bzw. Lötverbindungen zwischen Wellschlauch und Anschlussstück weitgehend verhindern. Jedoch ist die Herstellung solcher Gasleitungen fertigungstechnisch schwierig und entsprechend kostenintensiv.

Es stellt sich daher die Aufgabe, eine flexible Gasleitung sowie ein Herstellverfahren für flexible Gasleitungen zur Verfügung zu stellen, welche die Nachteile des Standes der Technik nicht aufweisen oder diese zumindest teilweise vermeiden.

Diese Aufgabe wird durch die flexible Gasleitung und durch das Herstellverfahren gemäss den unabhängigen Patentansprüchen gelöst.

In einem ersten Aspekt der Erfindung umfasst die flexible Gasleitung für die Versorgung von Haushaltsgeräten mit Brenngas einen gasdichten parallel- oder spiralgewellten Wellrohrschlauch aus Metall mit einem maximalen Innendurchmesser von 20 mm, der zumindest an einem seiner beiden Enden ein Anschlusselement zum Anschliessen der Gasleitung an eine weiterführende Leitung aufweist, mit welchem er in einem ersten Bereich stoffschlüssig und gasdicht durch Schweissen oder Löten verbunden ist. Der Wellrohrschlauch wird auf seiner Aussenseite von einer armierungsfreien, zugfesten Umhüllung aus einem Kunststoffmaterial umgeben, welche in einem zweiten Bereich kraft- und/oder formschlüssig in Längsrichtung der Gasleitung mit dem Anschlusselement verbunden ist, so dass aussen an der Gasleitung angreifende Zugkräften von der Umhüllung auf das Anschlusselement übertragen werden können, ohne dass dabei eine nennenswerte Zugbeanspruchung des Wellrohrschlauches oder der Verbindungsstelle zwischen Wellrohrschlauch und Anschlusselement resultiert. Dabei ist der zweite Bereich in Längsrichtung der Gasleitung gesehen näher an dem von diesem Anschlusselement gebildeten Ende der Gasleitung angeordnet als der erste Bereich, so dass der erste Bereich zwangsläufig durch die Umhüllung überdeckt ist. Unter einer "zugfesten Umhüllung" wird hier eine Umhüllung verstanden, welche als solche, d.h. ohne den Wellrohrschlauch, bei Raumtemperatur und unter einer über 5 Minuten andauernden Zugbeanspruchung von 850 N, bevorzugterweise von 950 N, weniger als 10% Längendehnung erfährt.

Dadurch, dass auf jegliche Armierungselemente zur Übertragung von Zugkräften von der flexiblen Gasleitung auf das Anschlusselement verzichtet wird, lassen sich solche flexiblen Gasleitungen auf einfache und kostengünstige Weise herstellen, z.B. indem ein endseitig mit Anschlussnippeln versehener Wellrohrschlauch im Extrudierverfahren äusserlich mit einer zugfesten Ummantelung aus PVC versehen wird.

In einer bevorzugten Ausführungsform der Gasleitung ist die zugfeste Umhüllung in dem zweiten Bereich, in welchem sie mit dem Anschlusselement verbunden ist, von einer Presshülse umgeben, so dass sich auf einfache Weise eine zuverlässige kraftschlüssige oder kraft- und formschlüssige Verbindung zwischen der zugfesten Umhüllung und dem jeweiligen Anschlusselement herstellen lässt.

Dabei ist es des Weiteren von Vorteil, wenn mit der Presshülse gleichzeitig Befestigungsmittel zur Befestigung des Anschlusselements an einer weiterführenden Leitung in axialer Richtung kraft- und/oder formschlüssig mit dem Anschlusselement verbunden sind, weil so eine möglichst direkte Zugkrafteinleitung in mit dem Anschlusselement gekoppelte Bauteile möglich wird.

In einer weiteren bevorzugten Ausführungsform der Gasleitung weist das Anschlusselement in dem zweiten Bereich äusserlich eine rauhe Oberfläche auf, welche bevorzugterweise randriert ist, so dass der Reibkoeffizient zwischen dem Anschlusselement und der zugfesten Umhüllung deutlich vergrössert wird.

In einer weiteren bevorzugten Ausführungsform der Gasleitung weist das Anschlusselement in dem zweiten Bereich an seiner Aussenfläche radiale Vorsprünge oder Zacken auf, welche bevorzugterweise umfangsmässig umlaufend ausgebildet sind, zur Erzeugung eines Formschlusses in axialer Richtung mit der Umhüllung.

Diese Massnahmen ermöglichen auf einfache Weise eine sichere und zugfeste Verbindung zwischen dem Anschlusselement und der zugfesten Umhüllung.

In noch einer weiteren bevorzugten Ausführungsform besteht die zugfeste Umhüllung aus einer einzigen Kunststoffschicht. Solche Gasleitungen lassen sich besonders günstig herstellen.

In einer anderen bevorzugten Ausführungsform besteht die zugfeste Umhüllung aus mehreren koaxialen Kunststoffschichten, woraus sich der Vorteil ergibt, dass die Umhüllung optimal für den jeweiligen Einsatzzweck der Gasleitung angepasst werden kann.

Bildet die zugfeste Umhüllung auf ihrer Innenseite in axialer Richtung einen Formschluss mit den Wellen des Wellrohrschlauchs, so ergibt sich ein Zugverbund, innerhalb dessen der Wellrohrschlauch bei Zugbeanspruchung zusammen mit der die Zugkraft aufnehmenden Umhüllung entsprechend der jeweiligen Dehnung der Umhüllung gedehnt wird.

Bevorzugterweise wird die Umhüllung dadurch hergestellt, dass eine Kunststoffschicht auf den Wellrohrschlauch aufextrudiert wird. Auf diese Weise lassen sich neuerungsgemässe Gasleitungen kostengünstig im Durchlaufverfahren herstellen.

Mit Vorteil wird die Umhüllung aus PVC gebildet oder enthält eine Schicht aus PVC, da dieser Werkstoff relativ günstig und einfach zu verarbeiten ist.

In einer bevorzugten Ausführungsform ist die Gasleitung derartig ausgebildet ist, dass sie bei Raumtemperatur unter einer über 5 Minuten andauernden Zugkraft von 900 N, bevorzugterweise von 1000 N, eine Längendehnung von höchstens 10% erfährt.

Dabei ist es zudem bevorzugt, wenn sie nach einer solchen Zugbeanspruchung über 5 Minuten mit einer Zugkraft von 900 N, bevorzugterweise 1000 N, im wieder entlasteten Zustand keine bleibende Längendehnung oder eine bleibende Längendehnung von höchstens 3% aufweist. Solche Gasleitungen erfüllen auch strengste Gesetzesvorschriften und sind deshalb in vielen Gebieten einsetzbar.

Ein zweiter Aspekt der Erfindung betrifft ein Verfahren zur Herstellung der flexiblen Gasleitung gemäss dem ersten Aspekt der Erfindung. Dabei wird ein gasdichter Wellrohrschlauch aus Metall mit einem Innendurchmesser von höchstens 20 mm an mindestens einem seiner beiden Enden stoffschlüssig und gasdicht durch Schweissen oder Löten mit einem Anschlusselement zum Anschliessen an eine weiterführende Leitung verbunden. Sodann werden der Wellrohrschlauch und das mit diesem verbundene Anschlusselement mit einer armierungfreien, zugfesten Umhüllung aus einem Kunststoffmaterial umgeben, derart, dass die Umhüllung die Verbindungsstelle zwischen Wellrohrschlauch und Anschlusselement überdeckt und im Bereich zwischen dem freien Anschlussende des Anschlusselements und der Verbindungsstelle kraft- und/oder formschlüssig in Längsrichtung mit dem Anschlusselement verbunden ist.

In einer bevorzugten Ausführungsform des Verfahrens wird die Umhüllung in dem Bereich zwischen dem freien Anschlussende des Anschlusselements und der Verbindungsstelle, in welchem sie kraft- und/oder formschlüssig in Längsrichtung mit dem Anschlusselement verbunden ist, von einer Presshülse umgeben, wobei es zudem bevorzugt ist, wenn mit der Presshülse gleichzeitig Befestigungsmittel zur Befestigung des Anschlusselements an einer weiterführenden Leitung in axialer Richtung kraft- und/oder formschlüssig mit dem Anschlusselement verbunden werden.

In einer weiteren bevorzugten Ausführungsform des Verfahren wird die Umhüllung aus genau einer oder aus mehreren koaxialen Kunststoffschichten gebildet.

In noch einer weiteren bevorzugten Ausführungsform des Verfahrens wird die Umhüllung auf den Wellrohrschlauch aufextrudiert.

Ein dritter Aspekt der Erfindung betrifft die Verwendung der erfindungsgemässen flexiblen Gasleitung gemäss dem ersten Aspekt der Erfindung für die Zuführung von Brenngas zu einem gasbetriebenen Haushaltsgerät. Bei solchen Verwendungen treten die Vorteile der Erfindung besonders deutlich zu Tage.

Weitere Ausgestaltungen, Vorteile und Anwendungen der Erfindung ergeben sich aus den abhängigen Patentansprüchen und aus der nachfolgenden Beschreibung anhand der Figuren. Dabei zeigen:
Fig. 1 einen Längsschnitt durch ein Ende einer ersten erfindungsgemässen flexiblen Gasleitung;
Fig. 2 einen Längsschnitt durch ein Ende einer zweiten erfindungsgemässen flexiblen Gasleitung; und
Fig. 3 einen Längsschnitt durch ein Ende einer dritten erfindungsgemässen flexiblen Gasleitung;

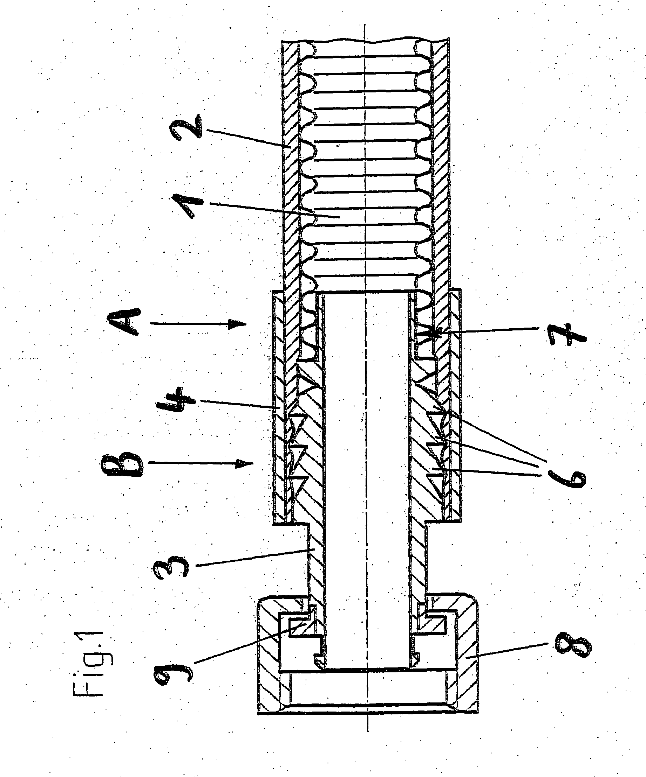

Wie in Fig. 1 zu erkennen ist, umfasst eine erste bevorzugte Ausführungsform der erfindungsgemässen flexiblen Gasleitung einen parallelgewellten Wellschlauch 1 aus Edelstahl mit 12 mm Innendurchmesser, welcher stoffschlüssig und gasdicht mit einem Anschlusselement 3 zum Anschliessen der Gasleitung an eine weiterführende Leitung verbunden ist. Dabei ist die Verbindung zwischen Anschlusselement 3 und Wellschlauch 1 dadurch hergestellt, dass das Ende des Wellschlauchs 1 auf einen vom Anschlusselement 3 gebildeten Stutzenteil 7 aufgeschweisst ist. Der Edelstahlschlauch 1 ist unmittelbar, d.h. direkt auf seiner Aussenseite, von einer zugfesten, armierungsfreien und auf diesen aufextrudierten Umhüllung 2 aus PVC umgeben, welche sich über den Bereich A der Schweissverbindung und über einen weiteren, näher am Ende der Gasleitung gelegenen Bereich B des Anschlusselements 3 erstreckt und eine Dicke von 2 mm aufweist. Dabei weist das verwendete PVC-Material einen derartigen Elastizitätsmodul auf, dass die Umhüllung 2 als solche bei einer 5 Minuten andauernden Zugbeanspruchung von 1000 N bei Raumtemperatur eine Längendehnung von weniger als 10% erfährt und sich nach der Entlastung wieder derartig zusammenzieht, dass höchstens eine bleibende Längendehnung von 3% zurückbleibt. Im Bereich B ist die Umhüllung 2 kraft- und formschlüssig in Längsrichtung der Gasleitung mit dem Anschlusselement 3 verbunden, indem sie mittels einer Presshülse 4 radial gegen das Anschlusselement 3 gepresst wird, welches in diesem Bereich B umlaufende radiale Vorsprünge 6 zur Erzeugung eines Formschlusses mit der Umhüllung 2 aufweist. An seinem freien Ende weist das Anschlusselement 3 eine Überwurfmutter 8 auf, mit welcher dieses Ende der Gasleitung am Anschlussstutzen eines Gasverbrauchers oder einer zuführenden oder abführenden Gasleitung befestigt werden kann. Dabei ist die Überwurfmutter 8 mit einem Pressring 9 nicht demontierbar auf dem eigentlichen Anschlusselement 3 gesichert.

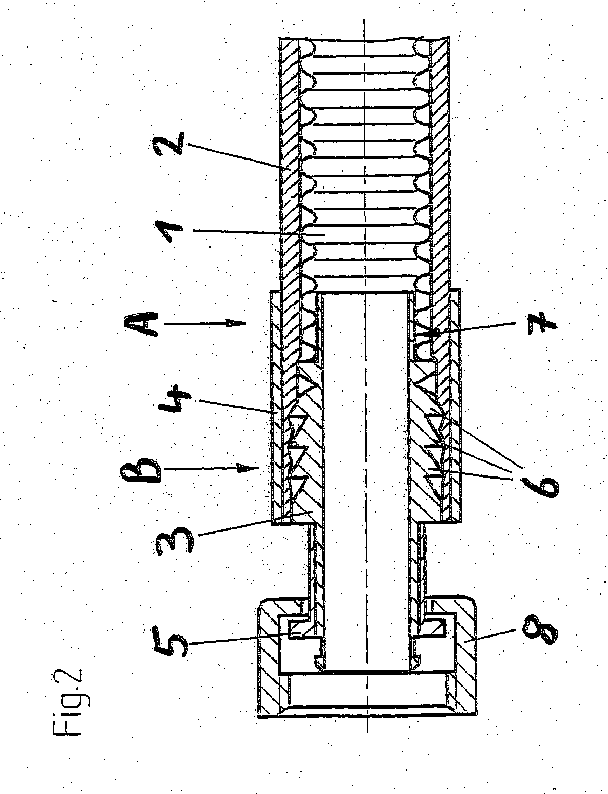

Fig. 2 zeigt eine zweite erfindungsgemässe flexible Gasleitung, welche sich von der in Fig. 1 gezeigten dadurch unterscheidet, dass hier die Überwurfmutter 8 von einer Hülse 5 gehalten ist, welche nicht demontierbar auf das eigentliche Anschlusselement 3 aufgepresst ist.

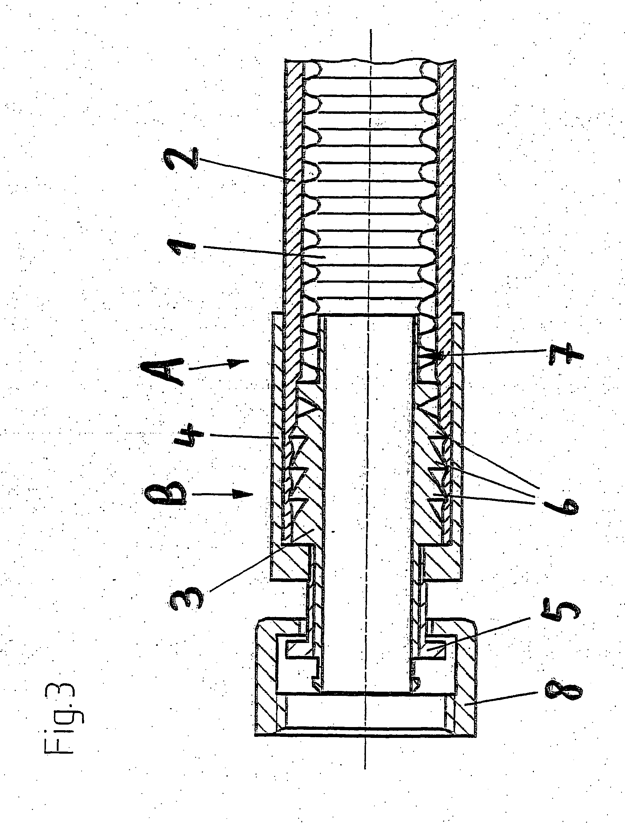

Fig. 3 zeigt eine dritte erfindungsgemässe flexible Gasleitung, welche sich von der in Fig. 2 gezeigten dadurch unterscheidet, dass hier die Hülse 5 von der Presshülse 4 umfasst und kraftschlüssig und nicht demontierbar auf dem Anschlusselement 3 gehalten wird.

## Patentansprüche

1. Flexible Gasleitung für die Versorgung von Haushaltsgeräten mit Brenngas, umfassend einen gasdichten Wellrohrschlauch (1) aus Metall mit einem Innendurchmesser von höchstens 20 mm, welcher von einer armierungfreien, zugfesten Umhüllung (2) aus einem Kunststoffmaterial umgeben ist, sowie ein Anschlusselement (3) zum Anschliessen der Gasleitung an eine weiterführende Leitung, mit welchem Anschlusselement (3) ein Ende des Wellrohrschlauchs (1) in einem ersten Bereich (A) des Anschlusselements (3) stoffschlüssig und gasdicht durch Schweissen oder Löten verbunden ist und mit welchem die Umhüllung (2) in einem zweiten Bereich (B) desselben kraft- und/oder formschlüssig in Längsrichtung der Gasleitung verbunden ist, zur Übertragung von an der Gasleitung angreifenden Zugkräften auf das Anschlusselement (3), wobei der zweite Bereich (B) in Längsrichtung der Gasleitung gesehen näher an dem von diesem Anschlusselement gebildeten Ende der Gasleitung angeordnet ist als der erste Bereich (A), so dass der erste Bereich (A) durch die Umhüllung (2) überdeckt ist.

2. Gasleitung nach Anspruch 1, **dadurch gekennzeichnet, dass** die Umhüllung (2) in dem zweiten Bereich (B), in welchem sie mit dem Anschlusselement (3) verbunden ist, von einer Presshülse (4) umgeben ist.

3. Gasleitung nach Anspruch 2, **dadurch gekennzeichnet, dass** mit der Presshülse (4) gleichzeitig Befestigungsmittel (5, 8) zur Befestigung des Anschlusselements (3) an einer weiterführenden Leitung in axialer Richtung kraft- und/oder formschlüssig mit dem Anschlusselement (3) verbunden sind.

4. Gasleitung nach einem der vorangehenden Ansprüche, **dadurch gekennzeichnet, dass** das Anschlusselement (3) in dem zweiten Bereich (B) an seiner Aussenfläche eine rauhe Oberfläche aufweist, insbesondere randriert ist, zur Erzeugung eines Kraftschlusses in axialer Richtung mit der Umhüllung (2).

5. Gasleitung nach einem der vorangehenden Ansprüche, **dadurch gekennzeichnet, dass** das Anschlusselement (3) in dem zweiten Bereich (B) an seiner Aussenfläche insbesondere umfangsmässig umlaufende radiale Vorsprünge (6) aufweist, insbesondere Zacken, zur Erzeugung eines Formschlusses in axialer Richtung mit der Umhüllung (2).

6. Gasleitung nach einem der vorangehenden Ansprüche, **dadurch gekennzeichnet, dass** die Umhüllung (2) aus genau einer oder aus mehreren koaxialen Kunststoffschichten besteht.

7. Gasleitung nach einem der vorangehenden Ansprüche, **dadurch gekennzeichnet, dass** die Umhüllung (2) auf ihrer Innenseite in axialer Richtung einen Formschluss mit den Wellen des Wellrohrschlauchs (1) bildet.

8. Gasleitung nach einem der vorangehenden Ansprüche, **dadurch gekennzeichnet, dass** die Umhüllung (2) auf den Wellrohrschlauch (1) aufextrudiert ist.

9. Gasleitung nach einem der vorangehenden Ansprüche, **dadurch gekennzeichnet, dass** die Umhüllung (2) aus PVC gebildet ist oder eine Schicht aus PVC enthält.

10. Gasleitung nach einem der vorangehenden Ansprüche, **dadurch gekennzeichnet, dass** der Wellrohrschlauch (1) parallelgewellt oder spiralgewellt ist und insbesondere, dass dieser aus Edelstahl ist.

11. Gasleitung nach einem der vorangehenden Ansprüche, **dadurch gekennzeichnet, dass** die Gasleitung derartig ausgebildet ist, dass sie bei Raumtemperatur unter einer für 5 Minuten andauernden Zugkraft von mindestens 900 N, insbesondere von mindestens 1000N, eine Längendehnung von höchstens 10% erfährt.

12. Gasleitung nach Anspruch 11, **dadurch gekennzeichnet, dass** die Gasleitung derartig ausgebildet ist, dass sie nach einer 5 Minuten andauernden Zugbeanspruchung bei Raumtemperatur von 900 N, insbesondere von 1000 N im wieder entlasteten Zustand eine bleibende Längendehnung von höchstens 3% aufweist.

13. Verfahren zur Herstellung einer flexiblen Gasleitung nach einem der vorangehenden Ansprüche, umfassend die Schritte:
a) Bereitstellen eines gasdichten Wellrohrschlauchs (1) aus Metall mit einem Innendurchmesser von höchstens 20 mm;
b) Verbinden eines Endes des Wellrohrschlauchs (1) stoffschlüssig und gasdicht durch Schweissen oder Löten mit einem Anschlusselement (3) zum Anschliessen an eine weiterführende Leitung;
c) Umgeben des Wellrohrschlauches und des mit diesem verbundenen Anschlusselements (3) mit einer armierungfreien, zugfesten Umhüllung (2) aus einem Kunststoffmaterial derart, dass die Umhüllung (2) die Verbindungsstelle zwischen Wellrohrschlauch (1) und Anschlusselement (3) überdeckt und in einem Bereich (B) zwischen dem freien Anschlussende des Anschlusselements (3) und der Verbindungsstelle kraft- und/oder formschlüssig in Längsrichtung der Gasleitung mit dem Anschlusselement (3) verbunden ist.

14. Verfahren nach Anspruch 13, **dadurch gekennzeichnet, dass** die Umhüllung (2) in dem Bereich (B), in welchem sie mit dem Anschlusselement (3) verbunden ist, von einer Presshülse (4) umgeben wird und insbesondere, dass mit der Presshülse (4) gleichzeitig Befestigungsmittel (5, 8) zur Befestigung des Anschlusselements (3) an einer weiterführenden Leitung in axialer Richtung kraft- und/oder formschlüssig mit dem Anschlusselement (3) verbunden werden.

15. Verfahren nach einem der Ansprüche 13 bis 14, **dadurch gekennzeichnet, dass** die Umhüllung (2) aus genau einer oder aus mehreren koaxialen Kunststoffschichten gebildet wird.

16. Gasleitung nach einem der Ansprüche 13 bis 15, **dadurch gekennzeichnet, dass** die Umhüllung (2) auf den Wellrohrschlauch (1) aufextrudiert wird.

17. Verwendung der Gasleitung nach einem der Ansprüche 1 bis 12 zum Zuführen von Brenngas zu einem Haushaltsgerät.
